(19) Europäisches Patentamt
European Patent Office
Office européen des brevets

(11) **EP 4 617 038 A1**

(12) **EUROPEAN PATENT APPLICATION**

(43) Date of publication:
**17.09.2025 Bulletin 2025/38**

(21) Application number: **24315088.5**

(22) Date of filing: **12.03.2024**

(51) International Patent Classification (IPC):
**B29C 44/34** (2006.01)   **B29C 44/44** (2006.01)
**B29C 44/60** (2006.01)   **C08J 9/18** (2006.01)
**C08J 9/232** (2006.01)   **B29K 105/04** (2006.01)

(52) Cooperative Patent Classification (CPC):
**B29C 44/3453; B29C 44/3461; B29C 44/445;
B29C 44/60; C08J 9/18; C08J 9/232;
B29K 2105/048**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **JSP International SARL
60190 Estrées-Saint-Denis (FR)**

(72) Inventors:
• **PRAUS, Jan
  60190 Estrée-Saint-Denis (FR)**
• **JANOUSEK, Jan
  60190 Estrée-Saint-Denis (FR)**
• **DZIKOWSKI, Pascal
  60190 Estrée-Saint-Denis (FR)**
• **VOPICKA, Ondrej
  60190 Estrée-Saint-Denis (FR)**

(74) Representative: **Hafner & Kohl PartmbB
Schleiermacherstraße 25
90491 Nürnberg (DE)**

(54) **A METHOD AND APPARATUS FOR PROCESSING POLYMER BEADS**

(57)   A method and apparatus for processing polymer beads.

Fig. 1

**EP 4 617 038 A1**

**Description**

The invention relates to a method for processing polymer beads. The method comprises pressurizing polymer beads, particularly in at least one pressure vessel, under specific pressurizing conditions, particularly comprising at least one specific pressure level and/or at least one specific temperature level, to produce pressurized polymer beads having closed internal cells. Further, the invention relates to an apparatus for processing polymer beads. The apparatus is configured to pressurize polymer beads, particularly in at least one pressure vessel, under specific pressurizing conditions, particularly comprising at least one specific pressure level and/or at least one specific temperature level, to produce pressurized polymer beads having closed internal cells.

Respective methods and apparatuses for processing polymer beads by pressurizing polymer beads, particularly in at least one pressure vessel, under specific pressurizing conditions, particularly comprising at least one specific pressure level and/or at least one specific temperature level, to produce pressurized polymer beads having closed internal cells are generally known from prior art.

It is also known that the result of pressurizing polymer beads can be affected by diverse chemical and/or physical parameters such that the actual pressurizing conditions have an important impact on the result of the pressurization process and thus, also on the properties of the pressurized polymer beads. As an example, it is known that e.g. under different temperature conditions, which might differ only slightly, polymer beads can pressurize differently. As such, pressurizing results can differ even when using the same bead material and the same pressurizing equipment, such as e.g. the same pressurizing vessel, e.g. when pressurizing is performed during winter and summer, for instance.

Currently, there is no satisfiable measure to reliably predict the outcome of a pressurization process of polymer beads. Rather, the personal experience of an operator is required to empirically adjust pressurizing conditions such that a desired outcome of a pressurization process, i.e. pressurized polymer beads having desired properties, can be achieved which is obviously a state which is prone to improvement, e.g. under automation aspects, efficiency aspects, etc.

Hence, there exists a need for reliably determining an information that is indicative of the properties of the polymer beads during and/or after a pressurization process which further enables improved process stability and might even enable in-situ process control of respective pressurization processes.

In the light of the above, it is therefore the objective of the invention to provide an improved method and apparatus for processing polymer beads by pressurizing the polymer beads, particularly in at least one pressure vessel, under specific pressurizing conditions, particularly comprising at least one specific pressure level and/or at least one specific temperature level, to produce pressurized polymer beads.

The object is achieved by a method for processing polymer beads according to claim 1. The subject-matter of the claims depending on claim 1 refers to possible embodiments of the method for processing polymer beads according to claim 1. Further, the object is achieved by an apparatus according to claim 14. The subject-matter of the claim depending on claim 14 relates to possible embodiments of the apparatus for processing polymer beads according to claim 14. Also, the object is achieved by a determination device according to claim 15.

A first aspect of the invention relates to a method for processing polymer beads. The term "polymer beads" generally refers to pressurizable polymer beads, which means that the polymer beads can be pressurized under specific pressurizing conditions, particularly comprising at least one specific pressure level and/or at least one specific temperature level. In particular, the term "polymer beads" can refer to expandable polymer beads, which means that the polymer beads can be expanded under specific expansion conditions, particularly comprising at least one specific pressure level and/or at least one specific temperature level. Respective expansion conditions can be influenced by respective pressurizing conditions such that also the expansion of respective polymer beads be influenced by the pressurizing of respective polymer beads.

Generally, the polymer beads which can be processed in accordance with the method can be or can comprise any. pressurizable polymer particles. The polymer beads can be either compact material or expanded material (referred to in the following examples, wherein "e" indicates "expanded"), as long as they are expandable. Non-limiting examples of pressurizable polymer beads which can be processed in accordance with the method are expandable ester-based polymer beads, such as polycarbonate-based (PC- or ePC-beads) polyethylene-terephthalate-based (PET- or ePET-beads) polylactic-acid-based (PLA- or ePLA-beads) and polyhydroxyalkanoate-based (PHA- or ePHA-beads) beads, expandable amide-based polymer beads such as polyamide-based (PA- or ePA-beads ) beads, expandable styrene-based polymer beads such as polystyrene-based (PS- or ePS-beads), acrylonitrile-butadiene-styrene-based (ABS- or eABS- beads), styrene-acrylonitrile-based (SAN- or eSAN- beads) beads, expandable urethane-based thermoplastic polymer beads such as expandable thermoplastic polyurethane-based (TPU- or eTPU-beads) beads or expandable ether-based beads such as polyphenylene-ether-based (PPE- or ePPE-beads) beads .

Particularly, the polymer beads which can be processed in accordance with the method can comprise one or more pressurizable olefin-based polymer beads, which can also be deemed or denoted expandable polyolefin beads (PO- or ePO-beads), of the following group: polypropylene (PP), polypropylene blend, polyethylene (PE), polyethylene blend, thermoplastic polyolefins (TPO), polyethylene-polypropylene blends, co-polymers of ethylene and at least one other olefinic monomer, copolymer of propylene and at least one other olefinic monomer and/or mixtures of the aforementioned, such as PP- or ePP-beads, PE- or ePE-beads and TPO and eTPO-beads. Accordingly, blends or mixtures containing at least one thermo-plastic polyolefin-based plastic material can be included. Further, the polymer beads which can be processed in accordance with the method can be or can comprise pressurizable hybrid-polymer particles, core-shell polymer particles comprising a polymer core containing at least one olefinic component and/or a polymer shell containing at least one olefinic component, or co-polymer particles containing at least one olefinic component, such as e.g. EVA, ePP/PS, PP/ePS, ePE/PS, PE/ePS. Expandable polymer beads based on mixtures and/or blends and/or copolymers of at least one or more of the aforementioned compositions are also conceivable.

Each polymer bead which can be processed in accordance with the method can comprise an internal cellular structure, which internal cellular structure is characterized by a plurality of closed internal cells generated through the processing. Preferably, the volume of the respective polymer beads comprises at least 50 % of closed internal cells. As such, the closed-cell content of the polymer beads is higher than 50 %; in other words, the polymer beads comprise a majority of cells which are closed internal cells. Additionally or alternatively, each polymer bead which can be processed in accordance with the method can obtain an internal cellular structure or an altered internal cellular structure, which internal cellular structure and altered internal cellular structure, respectively each being characterized by a plurality of closed internal cells generated through the processing of the polymer beads.

Hence, the method comprises a step of pressurizing polymer beads and performing at least one process of pressurizing polymer beads, respectively, particularly in at least one pressure vessel, under specific pressurizing conditions, particularly comprising at least one specific pressure level and/or at least one specific temperature level, to produce pressurized polymer beads having closed internal cells. This step can be deemed a first step of the method which can also be denoted a "pressurization step".

The at least one process of pressurizing polymer beads can be a process for producing pressurized polymer beads under specific pressurizing conditions, particularly comprising at least one specific pressure level and/or at least one specific temperature level, in a pressure vessel which can be or can comprise an autoclave (also sometimes referred to as a pressure tank or P-tank), for instance. The pressurizing conditions can thus, be conditions which can result in pressurized polymer beads having closed internal cells and/or altered closed internal cells, respectively. A non-limiting example of a respective process is a process, e.g. a pressurization process of a pre-expansion process, for producing low bulk density polymer beads from higher density polymer beads using one or more pressurization steps and one or more heating steps. In case the pressurization process of a pre-expansion process comprises more pressurization processes or steps, respectively, a first step can comprise a first pressurization with a first blowing agent, such as e.g. $CO_2$, and a second step can comprise a a second pressurization with a second blowing agent, such as e.g. air.

Additionally or alternatively, the at least one process of pressurizing polymer beads can be a pre-processing process, such as e.g. a drying process, a pre-pressurizing process, a pre-heating process, a primary expansion process, etc., which is performed before a process for producing pressurized polymer beads under specific pressurizing conditions, particularly comprising at least one specific pressure level and/or at least one specific temperature level, in an oven or in a pressure vessel, for instance. The pressurizing conditions can thus, be pre-processing conditions which can result in pressurized polymer beads having closed internal cells and/or altered closed internal cells, respectively.

Additionally or alternatively, the at least one process of pressurizing polymer beads can be a post-processing process, such as e.g. a drying process or a conditioning process, which is performed after a process for producing pressurized polymer beads, preferably before molding of the polymer beads to produce a molded part, under specific pressurizing conditions, particularly comprising at least one specific pressure level and/or at least one specific temperature level, in an oven or in a controlled atmosphere, for stabilizing the pressurized polymer beads, for instance. The pressurizing conditions can thus, be post-processing conditions which can result in pressurized polymer beads having closed internal cells and/or altered closed internal cells, respectively.

Additionally or alternatively, the at least one process of pressurizing the polymer beads can also be a process for producing a molded part from pressurized polymer ' beads by molding, particularly by fusing, respective pressurized polymer beads under specific pressurizing conditions, particularly comprising at least one specific pressure level and/or at least one specific temperature level, in a pressure vessel which can be or can comprise a mold, for instance. The pressurizing conditions can thus, be molding conditions which can result in pressurized polymer beads having closed internal cells and/or altered closed internal cells, respectively. Concrete, yet non-limiting examples of a respective process can comprise at least one of: chemical or exothermic molding, steam-chest molding, in-mold foaming of expandable gas-loaded polymer particles, conduction molding, wave-molding, RF-molding, for instance. Also, a respective process for producing a molded part from pressurized polymer beads by molding can be a so-called Atecarma-molding process, for instance.

Additionally or alternatively, the at least one process of pressurizing polymer beads can be a post-processing process, such as e.g. a drying or a conditioning process, which is performed after a process for producing a molded part from pressurized polymer beads, e.g. by molding, under specific pressurizing conditions, particularly comprising at least one specific pressure level and/or at least one specific temperature level, in an oven or in a controlled atmosphere, for stabilizing the molded part, for instance. The pressurizing conditions can thus, be post-processing conditions which can result in pressurized polymer beads having closed internal cells and/or altered closed internal cells, respectively.

The method further comprises a step of determining, via a hardware- and/or software-embodied determination device, an information indicative of a concentration and/or an amount or a quantity and/or a pressure of gas inside the closed internal cells of the polymer beads, particularly during pressurizing of the polymer beads. The information indicative of a concentration and/or an amount or a quantity and/or a pressure of gas inside the closed internal cells of the polymer beads, particularly during pressurizing the polymer beads, will be referred as "the information" in the following. This step can be deemed a second step of the method which can also be denoted a "determination step".

The step of performing the at least one process of pressurizing polymer beads and the step of determining, via the determination device, the information can be performed at least partly sequentially or at least partly simultaneously. As such, the step of determining, via the determination device, the information can be performed before and/or during and/or after the step of performing the at least one process of pressurizing polymer beads.

Generally, determining the information is based on at least one parameter indicative of the deformation behavior of the polymer beads during pressurizing of the polymer beads. As such, at least one parameter indicative of the deformation behavior, particularly the deformation behavior under pressure (compression behavior), of the polymer beads during pressurizing of the polymer beads is considered, by the determination device, for determining the information. The method is thus, based on the inventor's, insight that the deformation behavior of the polymer beads has a significant influence on the properties of the polymer beads to store gas inside the closed internal cells and that, for reliably determining a respective information, particularly during pressurizing of the polymer beads, it is of advantage to take into account at least one parameter indicative of the deformation behavior of the polymer beads during pressurizing of the polymer beads.

In other words, the inventors have found that the concentration and/or the quantity and/or the pressure of gas inside the closed internal cells of the polymer beads, particularly during pressurizing the polymer beads, is surprisingly related with one or more parameters indicative of the deformation behavior of the polymer beads during pressurizing and vice versa. This insight about the relationship between deformation and gas storage capacity of the polymer beads and thus, taking account of this relationship by considering at least one parameter indicative of the deformation behavior of the polymer beads during pressurizing of the polymer beads for determining, via the determination device, the information, is a significant advantage and enables a reliable determination of a respective information.

Determining the information can be performed in real-time which can form the basis for enabling real-time control of e.g. the pressurization process of the polymer beads in the pressurization step.

Determining the information can be performed continuously or discontinuously, particularly during a pressurizing cycle in which the polymer beads are pressurized. As such, the determination device can deliver a continuous or discontinuous stream of the respective information, which can be used for a continuous or discontinuous control of e.g. the pressurization process of the polymer beads.

In either case, the step of determining, via the determination device, the information, wherein at least one parameter indicative of the deformation behavior of the polymer beads during pressurizing of the polymer beads is considered for determining the information, enables more insight on the actual result of the pressurizing of the polymer beads. As indicated above, the polymer beads obtain closed internal cells or altered closed internal cells, respectively (both denoted as "closed internal cells" hereinafter) due to the pressurization process. The inventors have found that the properties of the polymer beads, particularly their deformation behavior under pressure, and thus, also the properties of the closed internal cells, such as e.g. the cell size, the cell size distribution, the shape, the shape distribution, etc., under pressure are important for the properties of the resulting pressurized polymer beads, e.g. with respect to their further-processing behavior. The inventors have also found that the properties of the closed internal cells depend on the concentration and/or the amount or quantity and/or the pressure of gas, which gas can be a blowing agent, such as e.g. $CO_2$, air, etc., inside the closed internal cells such that, by determining the information, also an information on the properties of the pressurized polymer beads can be obtained. In other words, the inventors have found that one can determine an information on the properties of the pressurized polymer beads by determining the information based on least one parameter indicative of the deformation behavior of the polymer beads during pressurizing of the polymer beads. This insight on the result of the process of pressurizing of the polymer beads is beneficial e.g. for implementing an improved process control, process monitoring, etc. not only of the pressurization process of the polymer beads but also for subsequent processes. As an example, one or more process parameters of a process in which pressurized polymer beads are molded to produce a molded part or one or more process parameters of a process in which pressurized polymer beads are expanded to produce polymer beads of lower density can be adjusted and/or controlled based on the determined information and thus, based on the insight on the properties of the pressurized polymer beads which can be derived from the information.

The information can also enable deriving an information indicative of the shape of the closed internal cells and the shape of the pressurized polymer beads, respectively because the shape of the closed internal cells and the shape of the pressurized polymer beads, respectively can depend on the deformation behavior of the polymer beads during pressurizing of the polymer beads. Hence, the at least one parameter indicative of the deformation behavior of the polymer beads during pressurizing of the polymer beads can also have an influence on the shape and/or size of the closed internal cells and the shape and/or size of the pressurized polymer beads, respectively.

The information can also enable deriving an information indicative of the amount of closed internal cells within the respective polymer beads.

The inventors have found that the shape and/or size of the closed internal cells and the shape and/or size of the pressurized polymer beads, respectively can be an important parameter for the properties of the pressurized polymer beads. As an example, the shape and/or size of the closed internal cells of the polymer beads and the shape and/or size of the pressurized polymer beads, respectively can be an important parameter e.g. of the conveying properties of the pressurized polymer beads, the further expandability of the pressurized polymer beads, e.g. in a so-called second pass process, the molding properties of the pressurized polymer beads, the thermal properties of the pressurized polymer beads, and the mechanical properties of the pressurized polymer beads.

The information can particularly enable deriving an information indicative of the pressure within the closed internal cells of the pressurized polymer beads because the pressure within the closed internal cells of the pressurized polymer beads can be an important parameter for the properties of the pressurized polymer beads. Particularly, the pressure within the closed internal cells of the pressurized polymer beads can be an important parameter e.g. of the conveying properties of the pressurized polymer beads, the further expandability of the pressurized polymer beads, e.g. in a so-called second pass process, the molding properties of the pressurized polymer beads, the thermal properties of the pressurized polymer beads, and the mechanical properties of the pressurized polymer beads.

As mentioned above, the information is determined via a hardware- and/or software-embodied determination device. The determination device is thus, adapted, e.g. by programming, to derive the information, wherein at least one parameter indicative of the deformation behavior of the polymer beads during pressurizing of the polymer beads is considered for determining the information. Further, the determination device can be adapted, e.g. by programming, to derive an information on the shape and/or size of the closed internal cells or the shape and/or size of the pressurized polymer beads, respectively and/or the pressure within the closed internal cells of the pressurized polymer beads, wherein at least one parameter indicative of the deformation behavior of the polymer beads during pressurizing of the polymer beads is considered for determining the information. In either case, the determination device is thus, adapted, e.g. by programming, to process at least one parameter indicative of the deformation behavior of the polymer beads during pressurizing of the polymer beads for determining the information.

The determining device can use or implement at least one algorithm, optionally at least one machine learning algorithm; for determining the information, considering at least one parameter indicative of the deformation behavior of the polymer beads during pressurizing of the polymer beads.

Additionally or alternatively, determining the information, considering at least one parameter indicative of the deformation behavior of the polymer beads during pressurizing of the polymer beads can be based on at least one function or model, typically a model which implements algorithms, which considers at least one parameter of the pressurizing conditions and/or at least one parameter of the polymer beads and at least one parameter indicative of the deformation behavior of the polymer beads during pressurizing of the polymer beads. As such, the determination device can comprise or implement at least one function or model, typically a model which implements algorithms, which considers at least one parameter of the pressurizing conditions and/or at least one parameter of the polymer beads and at least one parameter indicative of the deformation behavior of the polymer beads during pressurizing of the polymer beads.

Respective parameters of the pressurizing conditions and/or respective parameters of the polymer beads, i.e. particularly respective parameters indicative of the deformation behavior of the polymer beads during pressurizing of the polymer beads, can be obtained through sensor information provided from one or more sensors or from measurements. Respective sensors or measurements can be or can comprise acoustic sensors or measurements, optical sensors or measurements, density sensors or measurements, diffusion sensors or measurements, mass sensors or measurements, pressure sensors or measurements, temperature sensors or measurements, deformation behavior sensors or measurements, for instance. Additionally or alternatively, respective parameters of the pressurizing conditions and/or respective parameters of the polymer beads can be obtained through simulation and/or modeling, for instance.

Particularly, respective parameters of the pressurizing conditions can be obtained through sensor information provided from one or more sensors assigned to the respective pressurizing apparatus, particularly a respective pressure vessel of the apparatus, used for processing the polymer beads, particularly for pressurizing the polymer beads, for instance. Respective sensors can be or can comprise temperature sensors and/or pressure sensors and/or atmosphere sensors, for instance.

Particularly, respective parameters indicative of the deformation behavior of the polymer beads during pressurizing of the polymer beads can be obtained through sensor information provided from one or more sensors assigned to the respective pressurizing apparatus, particularly a respective pressure vessel of the apparatus, used for processing the polymer beads, particularly for pressurizing the polymer beads, for instance. Respective sensors can be or can comprise acoustic and/or optic sensors and/or pressure sensors, for instance.

Particularly, the determination device can comprise or implement at least one function or model, typically a model which implements algorithms, which considers at least one parameter of the pressurizing conditions, such as e.g. the temperature and/or pressure within a respective pressure vessel, at least one parameter indicative of the deformation behavior of the polymer beads during pressurizing of the polymer beads, and, optionally, additionally at least one parameter of the polymer beads, such as e.g. the diffusion of the gas into the polymer beads, particularly under consideration of the Arrhenius equation which is known from scientific literature, the mass of the polymer beads, the density of the polymer beads, the water content of the polymer beads, the shape and size of the polymer beads. Hence, a respective parameter of the polymer beads can also be or comprise the diffusion coefficient. Particularly, the diffusion coefficient can be determined via calculation or measurement, for instance. Measurements of the diffusion coefficient can be performed with a microgravimetric measurement device or a pressure decay measurement device, for instance. Respective measurement devices are disclosed in publication entitled "Aparatura pro stanoveni sorpce par v polymer-ech", published by Ondřej Vopička, Vladimir Hynek, Karel Friess, Milan Šípek and Petr Sysel in Chem. Listy 103, 310-314 (2009), for instance. Calculations of the diffusion coefficient can be performed by fitting data to the following equation taken from the book "The mathematics of diffusion" by J Crank, published by Oxford University Press; 2. edition (1 Jan. 1979):

$$\frac{M_t}{M_\infty} = 1 - \frac{6}{\pi^2} \sum_{n=1}^{\infty} \frac{1}{n^2} \exp\left(-D\, n^2\, \pi^2\, \frac{t}{a^2}\right)$$

Notably, also a pressure difference between the pressure in the pressure vessel and the pressure within the closed internal cells of the polymer beads can be taken into account. As such, a respective parameter indicative of the deformation behavior of the polymer beads during pressurizing of the polymer beads can take into account of a pressure difference between the pressure in the pressure vessel and the pressure within the closed internal cells of the polymer beads.

The at least one parameter of the pressurizing conditions can thus, be or can comprise a current and/or future pressure level within a pressurizable inner volume (processing volume) of at least one pressure vessel in which the polymer beads are pressurized. Additionally or alternatively, the at least one parameter of the pressurizing conditions can be or can comprise a current and/or future temperature level within a pressurizable inner volume (processing volume) of at least one pressure vessel in which the polymer beads are pressurized. Additionally or alternatively, the at least one parameter of the pressurizing conditions can be or can comprise at least one chemical and/or physical property, e.g. composition, vapor content, solubility, diffusion, permeation of the gas used to produce the pressurized polymer beads having closed internal cells.

Optionally, the at least one parameter of the pressurizing conditions can be or can comprise at least one chemical and/or physical property, e.g. composition, water content, partial pressure, concentration, solubility, diffusion, permeation of any fluid, other than the gas used to produce the pressurized polymer beads 20 having closed internal cells, if present within a pressurizable inner volume (processing volume) of at least one pressure vessel in which the polymer beads are pressurized, such as liquid water for instance.

The at least one parameter of the polymer beads can thus, be or can comprise at least one geometric parameter of the polymer beads, particularly a geometric parameter, such as e.g. the radius, indicative of the size and/or shape of the polymer beads. Notably, the parameter indicative of the deformation behavior of the polymer beads during pressurizing of the polymer beads can also be or comprise a respective geometric parameter of the polymer beads. In other words, a geometric parameter of the polymer beads can also be a parameter indicative of the deformation behavior of the polymer beads. This particularly, applies because there is a correlation between the geometry, particularly the size and/or shape, of a respective polymer bead and its compression state such that pressurizing the polymer beads will influence the compression behavior, hence the deformation behavior, of the polymer beads which will influence the size and/or shape of the polymer beads.

Additionally or alternatively, the at least one parameter of the polymer beads can be or comprise at least one chemical parameter of the polymer beads, particularly the chemical composition of the polymer beads. Additionally or alternatively, the at least one parameter of the polymer beads can be or comprise at least one physical parameter of the polymer beads, particularly the density of the polymer beads and/or the mass of the polymer beads and/or the moisture content of the polymer beads and/or the internal cell pressure of the polymer beads and/or the diffusion properties of the polymer beads. Additionally or alternatively, the at least one parameter can be or comprise the amount of internal closed cells within the pressurized polymer beads. Additionally or alternatively, the at least one parameter can be or comprise a geometric parameter, e.g. the shape and/or size, of the internal closed cells within the pressurized polymer beads. Additionally or alternatively, the at least one parameter of the polymer beads can be or can comprise at least one chemical and/or physical property, e.g. composition, vapor content, solubility, diffusion, permeation of the gas within the closed internal cells of the polymer beads.

Experiments have surprisingly shown that specifically geometric parameters indicative of the size and/or shape of the polymer beads and thus, the deformation behavior of the polymer beads under pressure are crucial for determining the information because these parameters are or can be directly related with the concentration and/or the amount or quantity and/or the pressure of gas inside the closed internal cells of the polymer beads such that considering the geometric parameters indicative of the size and/or shape of the polymer beads and thus, the deformation behavior of the polymer beads under pressure provides a reliable way to determine the information.

Exemplary steps for determining the information, considering at least one parameter indicative of the deformation behavior of the polymer beads during pressurizing of the polymer beads are given below:

Notably, the determination can include an information indicative of the diffusion behavior of the gas used to pressurize and produce the pressurized polymer beads having closed internal cells and/or of the gas within the closed internal cells of the polymer beads. Particularly, Fick's second law can be used for the determination, which generally allows for predicting how diffusion causes the concentration to change with respect to time:

$$\frac{\partial c}{\partial t} = D \nabla^2 c$$

wherein c = concentration, t= time, D = diffusion coefficient

Preferably, the dependency of the diffusion coefficient on the temperature can be taken into account by considering the Arrhenius equation:

$$D = D_0 \, exp(\frac{-E_a}{RT})$$

wherein D = diffusion coefficient, Do = diffusion coefficient at infinite temperature, $E_a$ = activation energy for diffusion, R = universal gas constant, T = (absolute) temperature

Further dependency equations described in the literature can be taken into account, for instance in Cussler, E. L. (1997). Diffusion: Mass Transfer in Fluid Systems (2nd edition). New York: Cambridge University Press. Notably, the determination can include references to the Chapman-Enskog theory and can also account for a pressure/density-dependency of the diffusion coefficient.

Notably, the determination can be based on the assumption that all polymer beads are spherical, i.e. have the same spherical base shape. The spherical base shape of the beads can be described by a radius, for instance and Fick's second law can therefore be applied using spherical coordinates and a spherical coordinate system, respectively.

Other models are conceivable as well. Particularly, models in which the assumption can be made that the polymer beads are cylindrical, ellipsoidal, ring-shaped, polyhedral, etc. to match the actual shape of the considered polymer beads. Fick's second law can therefore be applied considering the most suitable corresponding coordinates systems e.g., spherical, cylindrical, cartesian, etc.

Taking into account the diffusion of the concentration of the gas can enable determining the quantity or amount and the pressure of the gas by using a real gas law or the ideal gas law. Preferably, the ideal gas law is considered, such that:

$$c = \frac{P}{R * T}$$

and / or

$$c = \frac{n}{V}$$

wherein P = pressure of the gas, R = universal gas constant, T = (absolute) temperature, n = molar quantity of the gas, V = volume of the gas

Particularly, based on the above diffusion equations numerical methods such as e.g. finite difference methods or finite element methods can be applied, via the determination device, to assign concentration and/or quantity and/or pressure levels to different positions within respective polymer beads. Specifically, such methods can be applied to determine a concentration and/or a quantity and/or a pressure of gas at discrete points within the polymer bead.

Based on the determined concentration and/or quantity and/or pressure levels at the discrete points within the polymer bead, a value representative of the concentration and/or the quantity and/or the pressure of total absorbed gas, such as the internal cell pressure (ICP) can be calculated. Various methods can be implemented for this calculation, such as e.g. a weighted average of calculated pressures at the discrete points.

Assuming that the polymer beads are spherical and considering isotropic diffusion , allows to determine, via the determination device, the pressure level inside the respective polymer bead based on the known pressure gradient across the cross-section of the respective polymer bead, for instance by using a method comprising, particularly applying an integral to the pressure gradient in accordance with the following formula:

$$calculated\ ICP(t) = \frac{3\int_0^R P(t,r)\ r^2\ dr}{R^3}$$

wherein, calculated ICP = calculated internal cell pressure level, P = pressure; t = time; r = spatial (radial) coordinate; R = total radius of the polymer bead

Similar methods can be applied to calculate the concentration and/or the quantity of gas inside the internal cell pressure of the polymer beads, the concentration and the quantity of gas inside the internal cell pressure of the polymer beads being respectively referred to as ICC, which relates to the concentration of the gas within the internal cells of a respective polymer bead, and ICQ, which relates to the amount or quantity of the gas within the internal cells of a respective polymer bead.

Notably, experiments have shown that the above-calculated ICP and/or ICC and/or ICQ need correction, where the deformation behavior of the polymer beads comes into play. The inventors have found that reliable results can only be achieved when the deformation behavior of the polymer beads is considered. A parameter indicative of the deformation behavior of the polymer beads during pressurizing of the polymer beads can be the change in size of the polymer beads during pressurizing of the polymer beads, for instance. Such a parameter indicative of the deformation behavior of the polymer beads can be derived from e.g. previous experiments evaluating the change in size e.g. the change in radius (in the case of a sphere) caused by the so-called isotropic compression of the polymer beads during pressurization. Non-limiting exemplary methods to evaluate said deformation behavior are described hereinafter:

A pressure vessel, particularly a laboratory-scale pressure vessel, can be used to determine the size (radius) reduction of the (spherical) polymer beads during a pressurization experiment by visual reading of the change of volume of the polymer beads within said cylindrical pressure device at a known pressure compared to their volume at the initial pressure of the experiments, e.g. atmospheric pressure.

The experiments can be repeated at various pressure or temperature levels and, of course, other chemical and/or physical parameters of the respective polymer beads which have or can an influence on the deformation behavior can be considered. This way, it is possible to precisely and accurately determine the deformation behavior of the polymer beads in various pressurization conditions.

Other methods are conceivable as well, such as DMA (Dynamical mechanical analysis), optical scanning analyses of the polymer bead volume evolution (ultrasonic, X-Ray, etc.), use of a gas pycnometer, use of a pressure-decay apparatus.

Based on the results of said previous experiments, the deformation behavior of the polymer beads can be determined, particularly, from a value representative of the amount of total absorbed gas, such as the calculated ICP and/or ICC and/or ICQ from the above diffusion equations because the deformation behavior of the polymer beads will significantly depend on respective pressure differences between the outside of the respective polymer bead and the inside of the respective polymer bead. Based on this assumption, a value corresponding to a difference in between the pressure inside the at least one pressure vessel and of the calculated ICP of the said polymer beads can be used to determine the deformation behavior of the polymer beads. Of course, other chemical and/or physical parameters of the respective polymer beads which have an influence on the deformation behavior can be considered. Also, temperature, which typically also has an influence on the deformation behavior, can be considered.

As such, the calculated ICP and/or ICC and/or ICQ can be corrected with a parameter indicative of the deformation behavior of the polymer beads, which parameter can be a respective pressure difference in between the pressure inside the at least one pressure vessel and of the calculated ICP of the said polymer beads, such that the overall determination of the information will consider at least one parameter indicative of the deformation behavior of the polymer beads during pressurizing of the polymer beads.

As a non-limiting example, the above-equation of the calculated ICP (which similarly applies to ICC and/or ICQ) can consider a parameter R'(t) instead of R, wherein R'(t) accounts for the change over time in the polymer beads radius caused by the deformation of said polymer beads during pressurizing of the polymer beads, therefore enabling determining accurately an information indicative of a concentration and/or a quantity and/or a pressure of gas inside the closed internal cells of the polymer beads, particularly during pressurizing of the polymer beads, considering at least one parameter indicative of the deformation behavior of the polymer beads during pressurizing of the polymer beads, such that:

$$determined\ ICP(t) = \frac{3 \int_0^{R\prime(t)} P(t,r)\, r^2\, dr}{(R'(t))^3}$$

The method can further comprise a step of controlling, particularly via a hardware- and/or software-embodied control device, the pressurizing conditions for pressurizing the polymer beads, e.g. in the or at least one pressure vessel. Hence, as indicated above, the information can be used for controlling, particularly via a control device, the pressurizing conditions for pressurizing the polymer beads, e.g. in the or at least one pressure vessel. Controlling the pressurizing conditions for pressurizing the polymer beads can comprise at least one of: adjusting or setting a specific static or dynamic temperature level, e.g. within a pressure vessel; adjusting or setting a specific static or dynamic pressure level, e.g. within a pressure vessel; adjusting or setting a specific static or dynamic atmosphere, e.g. within a pressure vessel, for instance. Controlling the pressurizing conditions can lead to at least one of: improved process quality and/or process efficiency, particularly with regard to shorter cycle times, improved quality of the pressurized polymer beads, improved and stabler expansion ability of the pressurized polymer beads, and improved quality of molded parts produced by molding pressurized polymer beads, for instance.

As such, controlling the pressurizing conditions, which can generally be specified by a pressure set point and/or a temperature set point, for instance, in at least one pressure vessel on basis of the information indicative of an amount or a quantity of gas inside the closed internal cells of the polymer beads can comprise controlling the current and/or future pressure level within a pressurizable inner volume (processing volume) of the at least one pressure vessel, and/or controlling the current and/or future temperature level within a pressurizable inner volume (processing volume) of the at least one pressure vessel, and/or controlling the current and/or future atmosphere within a pressurizable inner volume (processing volume) of the at least one pressure vessel.

As mentioned above, controlling the pressurizing conditions for pressurizing the polymer beads can be performed via a hardware- and/or software-embodied control device. The control device can be in communication with the determination device so as to receive the information. As such, the control device and the determination device each can comprise one or more communication interfaces enabling a communication between the determination device and the control device such that the control device can receive the information from the determination device. Particularly, the control device can use the received information to implement an automatic control of the pressurizing conditions for pressurizing the polymer beads which can comprise an automatic static or dynamic adjustment or setting of one or more parameters, such as e.g. pressure, temperature, atmosphere, etc., which have an impact on the pressurizing conditions. The control device can therefore, communicate with means for adjusting and/or setting e.g. pressure, temperature, atmosphere, etc. within the respective pressure vessel and control their operation to realize specific pressurizing conditions within the respective pressure vessel. Respective means can be or comprise tempering means to adjust or set the temperature within the respective pressure vessel and/or valves connected with a pressure reservoir and/or atmosphere reservoir to adjust or set the pressure and/or atmosphere within the respective pressure vessel, for instance.

In either case, controlling, via the control device, the pressurizing conditions in the at least one pressure vessel on basis of the information can comprise controlling the pressurizing conditions in the at least one pressure vessel with respect to a target concentration and/or target amount or quantity and/or target pressure of gas inside the closed internal cells of the polymer beads and thus, particularly a target inner cell pressure of the polymer beads. The respective target values can be application-specific and/or material-specific values and can thus, depend on specific chemical and/or physical properties of the polymer beads. Again, experiments have shown that chemical and/or physical properties of the polymer beads indicative of the size and/or shape of the polymer beads and/or the deformation behavior of the polymer beads under compression can be beneficial.

The method can further comprise a step of outputting, via an outputting device, the information to an operator and/or to a controller of a pre-expansion device for expanding the polymer beads and/or to a controller of a pre-processing device for pre-processing the polymer beads before the pressurizing and/or to a controller of a post-processing device for post-processing the polymer beads after pressurizing and/or to a controller of a molding device for molding the polymer beads to produce a molded part and/or to a controller of a post-processing device for post-processing the polymer beads after molding. Outputting the information can form the basis for any further control step, particularly of at least one of the aforementioned devices.

The method can further comprise a step of evaluating the information with respect to at least one evaluation criterion, particularly a reference or target criterion indicative of a reference or target concentration and/or reference or target amount or quantity and/or reference or target pressure of gas inside the closed internal cells of the polymer beads.

The reference or target criterion, which can be or comprise a reference or target value or a reference or target range, can be chosen under consideration of specific ambient conditions, such as temperature, humidity, pressure, within a plant in which the processing of the polymer beads is performed. As such, respective reference or target criterion can be different for different ambient conditions within a plant in which the processing of the polymer beads is performed. Notably, different ambient conditions within a plant in which the processing of the polymer beads is performed can originate from different times of the day and/or times of a month and/or times of a year, such as e.g. seasons of the year, such as summer and winter, for instance, which enables that the method enables compensating for different ambient conditions within a respective plant and thus, can assure a constant outcome of the pressurization process taking into account of current and/or future ambient conditions in a respective plant.

In either case, a respective reference or target criterion can be obtained through previous pressurization processes of same or similar polymer beads, for instance.

Additionally or alternatively, a respective reference or target criterion can be derived from models, simulations, etc.

The method can also comprise a step in which the information is used for adjusting or setting a respective reference or target criterion, particularly a reference or target value, indicative of a reference or target concentration and/or reference or target amount or quantity and/or reference or target pressure of gas inside the closed internal cells of the polymer beads which reference or target criterion is used in a process for pressurizing polymer beads and/or in a process for processing pressurized polymer beads, for instance. Particularly, the method can enable that a respective reference or target criterion of a primary process in which polymer beads are processed, e.g. to pressurize polymer beads, are adjusted based on parameters of a secondary process in which the pressurized polymer beads are processed, e.g. to (further) expand the pressurized polymer beads or to produce a molded part, or vice versa. As an example, the method can enable that a respective reference or target criterion of a respective secondary process as mentioned further above can be adjusted based on one or more parameters of a respective primary process as mentioned above which enables that the respective reference or target criterion of the respective secondary process can be individually adjusted based on the one or more parameters of the respective primary process or vice versa. As another example, it is also conceivable that a respective reference or target criterion of a respective primary process as mentioned further above can be dynamically adjusted based on one or more parameters of a respective secondary process as mentioned above being carried out simultaneously with the primary process which enables that the respective reference or target criterion of the respective primary process can be individually adjusted based on the one or more parameters of the respective secondary process or vice versa.

The method can also enable that the information can be or is used for controlling the pressurizing conditions of multiple pressure vessels. Controlling the pressurizing conditions of multiple pressure vessels can be performed at least partly sequentially or at least partly simultaneously. Respective multiple pressure vessels can be assigned to one or more apparatuses, for instance. Additionally or alternatively, respective multiple pressure vessels can be assigned to different primary processes and/or to different secondary processes, for instance.

A second aspect of the invention relates to an apparatus for processing polymer beads, particularly in accordance with the method of the first aspect of the invention such that all remarks concerning the method of the first aspect of the invention also apply to the apparatus of the second aspect of the invention and vice versa.

The apparatus particularly, comprises at least the following components:

A first component of the apparatus is at least one processing volume for pressurizing polymer beads under specific pressurizing conditions, particularly comprising at least one specific pressure level and/or at least one specific temperature level, to produce pressurized polymer beads. The at least one processing volume can be defined by at least one pressure vessel which can be an autoclave (sometimes also referred to as a pressure tank or P-tank), a mold, an oven, etc. The apparatus can thus, comprise at least one pressure vessel which defines at least one processing volume in which polymer beads can be processed, the processing of the polymer beads particularly including pressurizing the polymer beads to obtain pressurized polymer beads.

A second component of the apparatus is a hardware- and/or software-embodied determination device for determining an information indicative of a concentration and/or an amount or a quantity and/or a pressure of gas inside the internal cells of the polymer beads, particularly during pressurizing of the polymer beads, considering at least one parameter indicative of the deformation behavior of the polymer beads during pressurizing of the polymer beads.

An optional third component of the apparatus is a hardware- and/or software-embodied control device for controlling the pressurizing conditions in the at least one processing volume, particularly in the at least one pressure vessel, based on the determined information indicative of a concentration and/or an amount or a quantity and/or a pressure of gas inside the internal cells of the polymer beads, particularly during pressurizing of the polymer beads.

An optional fourth component of the apparatus is a hardware- and/or software-embodied outputting device for outputting the information to an operator and/or to a controller of a pre-processing device for pre-processing the polymer beads before the pressurizing and/or to a controller of a molding device for molding the polymer beads to produce a molded part and/or to a controller of a post-processing device for post-processing the polymer beads after pressurizing.

A third aspect of the invention relates to a hardware- and/or software-embodied determination device for an apparatus according to the second aspect of the invention such that all remarks concerning the method of the first aspect of the invention and the apparatus of the second aspect of the invention also apply to the determination device of the third aspect of the invention and vice versa. The determination device is particularly, adapted, e.g. by programming, for determining an information indicative of a concentration and/or an amount or a quantity and/or a pressure of gas inside the closed internal cells of the polymer beads, particularly during pressurizing of the polymer beads, considering at least one parameter indicative of the deformation behavior of the polymer beads during pressurizing of the polymer beads.

A fourth aspect of the invention relates to a machine-readable software product which comprises instructions which, when executed by a controller of a respective apparatus and/or determination device cause the apparatus of the second aspect of the invention and/or the determination device of the third aspect of the invention to carry out one more or all steps of the method of the first aspect of the invention such that all remarks concerning the method of the first aspect of the invention, the apparatus of the second aspect of the invention, and the determination device of the third aspect of the invention also apply to the machine-readable software product and vice versa.

The disclosure will also be readily understood by the following description of exemplary embodiments in conjunction with the accompanying drawings in which:

Fig.1 illustrates a principle drawing of an apparatus for processing polymer beads in accordance with an exemplary embodiment; and

Fig. 2 illustrates a flow diagram of a method in accordance with an exemplary embodiment.

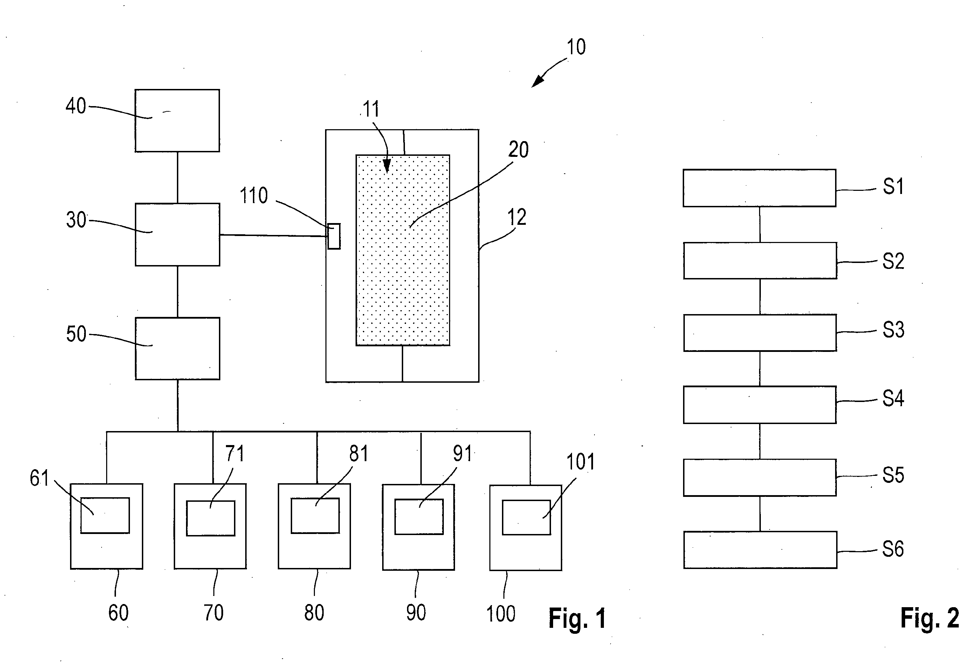

Fig. 1 illustrates a principle drawing of an apparatus 10 for processing polymer beads 20 in accordance with an exemplary embodiment. The apparatus 10 is particularly, configured to pressurize polymer beads. 20 under specific pressurizing conditions, particularly comprising at least one specific pressure level and/or at least one specific temperature level, to produce pressurized polymer beads 20.

As such, the apparatus 10 comprises at least one processing volume 11 for pressurizing polymer beads 20 under specific pressurizing conditions, particularly comprising at least one specific pressure level and/or at least one specific temperature level, to produce pressurized polymer beads. The at least one processing volume 11 can be defined by at least one pressure vessel 12 of the apparatus 10. The pressure vessel 12 can be an autoclave (sometimes also referred to as a pressure tank or a P-tank), a mold, an oven, for instance depending on the actual configuration of the apparatus 10.

The apparatus 10 further comprises a hardware- and/or software-embodied determination device 30 for determining an information indicative of a concentration and/or an amount or a quantity and/or a pressure of gas inside the internal cells of the polymer beads 20, particularly during pressurizing of the polymer beads 20. The determination device 30 is thus, assigned to the apparatus 10 and is configured, e.g. by implementing a function or a model, to determine an information indicative of a concentration and/or an amount or a quantity and/or a pressure of gas inside the internal cells of the polymer beads 20, particularly during pressurizing of the polymer beads 20.

In the exemplary embodiment of Fig. 1, the apparatus 10 further comprises an optional hardware- and/or software-embodied control device 40 for controlling the pressurizing conditions in the at least one processing volume 11 or pressure vessel 12, respectively based on the determined information indicative of a concentration and/or an amount or a quantity and/or a pressure of gas inside the internal cells of the polymer beads 20.

in the exemplary embodiment of Fig. 1, the apparatus 10 further comprises an optional hardware- and/or software-embodied outputting device 50 for outputting an information indicative of a concentration and/or an amount or quantity and/or a pressure of gas of gas inside the closed internal cells of the polymer beads 20, particularly during pressurizing of the polymer beads 20, hereinafter referred to as "the information", to an operator and/or to a controller 61 of a pre-expansion device 60 for expanding the polymer beads 20 and/or to a controller 71 of a pre-processing device 70 for pre-processing the polymer beads before the pressurizing and/or to a controller 81 of a post-processing device 80 for post-processing the polymer beads after pressurizing, for instance and/or to a controller 91 of a molding device 90 for molding the polymer beads to produce a molded part and/or to a controller 101 of a post-processing device 100 for post-processing the polymer beads after molding, for instance.

The apparatus 10 is configured to perform a method for processing polymer beads 20 which method will be explained in accordance with Fig. 2 which illustrates a flow diagram of a method in accordance with an exemplary embodiment.

The method of the exemplary embodiment of Fig. 2 is a method for processing polymer beads 20. The term "polymer beads" generally refers to pressurizable polymer beads 20, which means that the polymer beads 20 can be pressurized under specific pressurizing conditions, particularly comprising at least one specific pressure level and/or at least one specific temperature level. In particular, the term "polymer beads" can refer to expandable polymer beads 20, which means that the polymer beads 20 can be expanded under specific conditions expansion conditions, particularly comprising at least one specific pressure level and/or at least one specific temperature level. Respective expansion conditions can be influenced by respective pressurizing conditions such that also the expansion of respective polymer beads 20 can correspond to the pressurizing of respective polymer beads 20.

Hence, the polymer beads 20 which can be processed in accordance with the method can be or can comprise any pressurizable polymer particles 20. Non-limiting examples of pressurizable polymer beads 20 which can be processed in accordance with the method are expandable ester-based polymer beads, such as polycarbonate-based (PC- or ePC-beads) polyethylene-terephthalate-based (PET- or ePET-beads) polylactic-acid-based (PLA- or ePLA-beads) and polyhydroxyalkanoate-based (PHA- or ePHA-beads) beads, expandable amide-based polymer beads such as polyamide-based (PA- or ePA-beads ) beads, expandable styrene-based polymer beads such as polystyrene-based (PS- or ePS-beads), acrylonitrile-butadiene-styrene-based (ABS- or eABS- beads), expandable styrene-acrylonitrile-based (SAN- or eSAN-beads) beads, expandable urethane-based thermoplastic polymer beads such as thermoplastic polyurethane-based (TPU- or eTPU-beads) beads or expandable ether-based beads such as polyphenylene-ether-based (PPE- or ePPE-beads) beads .

Particularly, the polymer beads 20 which can be processed in accordance with the method can comprise one or more pressurizable olefin-based polymer beads, which can also be deemed or denoted expandable polyolefin beads (PO- or ePO-beads), of the following group: polypropylene (PP), polypropylene blend, polyethylene (PE), polyethylene blend, thermoplastic polyolefins (TPO), polyethylene-polypropylene blends, co-polymers of ethylene and at least one other olefinic monomer, copolymer of propylene and at least one other olefinic monomer and/or mixtures of the aforementioned, such as PP- or ePP-beads, PE- or ePE-beads and TPO- and eTPO-beads. Accordingly, blends or mixtures containing at least one thermo-plastic polyolefin-based plastic material can be included Further, the polymer beads 20 which can be processed in accordance with the method can be or can comprise pressurizable hybrid-polymer particles, core-shell polymer particles comprising a polymer core containing at least one olefinic component and/or a polymer shell containing at least one olefinic component, or co-polymer particles containing at least one olefinic component, such as e.g. EVA, eEPP/PS, PP/ePS, ePE/PS, PE/eEPS. Expandable polymer beads based on mixtures and/or blends and/or copolymers of at least one or more of the aforementioned compositions are also conceivable.

Each polymer bead 20 which can be processed in accordance with the method can comprise an internal cellular structure, which internal cellular structure is characterized by a plurality of closed internal cells generated through the processing. Preferably, the closed-cell content of the polymer beads 20 is higher than 50%; in other words, the polymer beads 20 comprise a majority of cells which are closed internal cell. Additionally or alternatively, each polymer bead 20 which can be processed in accordance with the method can obtain an internal cellular structure or an altered internal cellular structure, which internal cellular structure and altered internal cellular structure, respectively each being characterized by a plurality of closed internal cells generated through the processing of the polymer beads 20.

Hence, the method comprises a step S1 of performing at least one process of pressurizing polymer beads 20, particularly in the at least one pressure vessel 12 of the apparatus 10, under specific pressurizing conditions, particularly comprising at least one specific pressure level and/or at least one specific temperature level, to produce pressurized polymer beads having closed internal cells. This step S1 can be deemed or denoted a "pressurization step".

Generally, the process of pressurizing polymer beads 20 can be a process for producing pressurized polymer beads 20 under specific pressurizing conditions, particularly comprising at least one specific pressure level and/or at least one specific temperature level. The pressurizing conditions can thus, be conditions which can result in pressurized polymer beads 20 having closed internal cells and/or altered closed internal cells, respectively. A non-limiting example of a respective process is a process, e.g. a pressurization process of a pre-expansion process, for producing pressurized polymer beads 20, which pre-expansion step typically comprises producing low bulk density polymer beads from higher density polymer beads 20 using one or more pressurization steps and one or more heating steps. In case the pre-expansion process comprises more pressurization processes or steps, respectively a first step can comprise a first pressurization with a first blowing agent, such as e.g. $CO_2$, and a second step can comprise a second pressurization with a second blowing agent, such as e.g. air.

Additionally or alternatively, the process of pressurizing polymer beads 20 can be a pre-processing process, such as e.g. a drying process, a pre-pressurizing process, a pre-heating process, a primary expansion process etc., which is performed before a process for producing pressurized polymer beads 20 under specific pressurizing conditions, particularly comprising at least one specific pressure level and/or at least one specific temperature level, in an oven or in a pressure vessel, for instance. The pressurizing conditions can thus, be pre-processing conditions which can result in pressurized polymer beads 20 having closed internal cells and/or altered closed internal cells, respectively.

Additionally or alternatively, the process of pressurizing polymer beads 20 can be a post-processing process, such as e.g. a drying process or a conditioning process, which is performed after a process for producing pressurized polymer beads 20, preferably before molding of the polymer beads 20 to produce a molded part, under specific pressurizing conditions, particularly comprising at least one specific pressure level and/or at least one specific temperature level, in an oven or in a controlled atmosphere, for stabilizing the pressurized polymer beads 20, for instance. The pressurizing conditions can thus, be post-processing conditions which can result in pressurized polymer beads 20 having closed internal cells and/or altered closed internal cells, respectively.

Additionally or alternatively, the process of pressurizing the polymer beads 20 can also be a process for producing a molded part from pressurized polymer beads 20 by molding, particularly by fusing, respective pressurized polymer beads 20 under specific pressurizing conditions, particularly comprising at least one specific pressure level and/or at least one specific temperature level, in a pressure vessel 12 which can be or can comprise a mold of a molding apparatus, for instance. The pressurizing conditions can thus, be molding conditions which can result in pressurized polymer beads 20 having closed internal cells and/or altered closed internal cells, respectively. Concrete, yet non-limiting examples of a respective process can comprise at least one of: chemical or exothermic molding, steam-chest molding, in-mold foaming of expandable gas-loaded polymer particles, conduction molding, wave-molding, RF-molding, for instance. Also, a respective process for producing a molded part from pressurized polymer beads 20 by molding can be a so-called Atecarma-molding process, for instance.

Additionally or alternatively, the process of pressurizing polymer beads 20 can be a post-processing process, such as e.g. a drying process or a conditioning process, which is performed after a process for producing a molded part from pressurized polymer beads 20 by molding, particularly comprising at least one specific pressure level and/or at least one specific temperature level, in an oven or in a controlled atmosphere, for stabilizing the molded part, for instance. The pressurizing conditions can thus, be post-processing conditions of a molded part which can result in pressurized polymer beads 20 having closed internal cells and/or altered closed internal cells, respectively.

The method further comprises a step S2 of determining, via a hardware- and/or software-embodied determination device 30, a respective information. This step S2 can be deemed or denoted a "determination step".

The step S1 of performing the at least one process of pressurizing polymer beads 20 and the step S2 of determining, via the determination device 30, an information indicative of an amount or a quantity of gas inside the closed internal cells of the polymer beads 20 can be performed at least partly sequentially or at least partly simultaneously. As such, the step S2 of determining, via the determination device 30, an information indicative of an amount or a quantity of gas inside the closed internal cells of the polymer beads 20 can be performed before and/or during and/or after the step S1 of performing the at least one process of pressurizing polymer beads 20.

Generally, the determining the information is based on at least one parameter indicative of the deformation behavior of the polymer beads 20 during pressurizing of the polymer beads 20. As such, at least one parameter indicative of the deformation behavior, particularly the deformation behavior under pressure, of the polymer beads 20 during pressurizing of the polymer beads 20 is considered, by the determination device 30, for determining the information. The method is thus, based on the inventor's insight that the deformation behavior of the polymer beads 20 has a significant influence on the properties of the polymer beads 20 to store gas inside the closed internal cells and that, for reliably determining a respective information, it is of advantage to take into account of at least one parameter indicative of the deformation behavior of the polymer beads 20 during pressurizing of the polymer beads 20.

In other words, the method makes use of the insight that the quantity of gas inside the closed internal cells of the polymer beads 20, particularly during pressurizing the polymer beads 20, is surprisingly related with one or more parameters indicative of the deformation behavior of the polymer beads 20 during pressurizing and vice versa. This insight about the relationship between deformation and gas storage capacity of the polymer beads 20 and thus, taking account of this relationship by considering at least one parameter indicative of the deformation behavior of the polymer beads 20 during pressurizing of the polymer beads 20 for determining the information, is a significant advantage and enables a reliable determination of the information.

Determining the information can be performed in real-time which can form the basis for enabling real-time control of e.g. the pressurization process of the polymer beads 20 in the pressurization step.

Generally, determining the information can be performed continuously or discontinuously, particularly during a pressurizing cycle. As such, the determination device 30 can deliver a continuous or discontinuous stream of the information which can be used for a continuous or discontinuous control of e.g. the pressurization process of the polymer beads 20.

In either case, the step of determining, via the determination device 30, the information, wherein at least one parameter indicative of the deformation behavior of the polymer beads 20 during pressurizing of the polymer beads 20 is considered for determining the information, enables more insight on the actual result of the pressurizing of the polymer beads 20. As indicated above, the polymer beads 20 have closed internal cells or can obtain closed internal cells or altered closed internal cells, respectively (both denoted as "closed internal cells" hereinafter) due to the pressurization process. The inventors have found that the properties of the polymer beads 20, particularly their deformation behavior under pressure, and thus, also the properties of the closed internal cells, such as e.g. the cell size, the cell size distribution, the shape, the shape distribution, etc., under pressure are important for the properties of the pressurized polymer beads 20, e.g. with respect to their further-processing behavior. The inventors have also found that the properties of the closed internal cells depend on the concentration and/or the amount or quantity and/or the pressure of gas, which gas can be a blowing agent, such as e.g. gaseous or supercritical $CO_2$, air, etc., inside the closed internal cells such that, by determining the information also an information on the properties of the pressurized polymer beads 20 can be obtained. In other words, the inventors have found that one can determine an information on the properties of the pressurized polymer beads 20 by determining the information based on least one parameter indicative of the deformation behavior of the polymer beads 20 during pressurizing of the polymer beads 20. This insight on the result of the process of pressurizing of the polymer beads 20 is beneficial e.g. for implementing an improved process control, process monitoring, etc. not only of the pressurization process of the polymer beads 20 but also for subsequent processes. As an example, one or more process parameters of a secondary process in which pressurized polymer beads 20 are molded to produce a molded part can be adjusted and/or controlled based on determined information and thus, based on the insight on the properties of the pressurized polymer beads 20 which can be derived from the information indicative of an amount or a quantity of gas inside the closed internal cells of the polymer beads 20.

The shape of the closed internal cells and the shape of the pressurized polymer beads 20, respectively also depends on the deformation behavior of the polymer beads 20 during pressurizing of the polymer beads 20. Hence, the at least one parameter indicative of the deformation behavior of the polymer beads 20 during pressurizing of the polymer beads 20 also has an influence on the shape and/or size of the closed internal cells and the shape and/or size of the pressurized polymer beads 20, respectively.

The shape and/or size of the closed internal cells and the shape and/or size of the pressurized polymer beads 20, respectively can be an important parameter for the properties of the pressurized polymer beads 20. As an example, the shape and/or size of the closed internal cells and the shape and/or size of the pressurized polymer beads 20, respectively can be an important parameter e.g. of the conveying properties of the pressurized polymer beads 20, the further expandability of the pressurized polymer beads 20, e.g. in a so-called second pass process, the molding properties of the pressurized polymer beads 20, the thermal properties of the pressurized polymer beads 20, and the mechanical properties of the pressurized polymer beads 20.

The information can particularly enable deriving an information indicative of the pressure within the closed internal cells of the pressurized polymer beads 20 because the pressure within the closed internal cells of the pressurized polymer beads 20 can be an important parameter for the properties of the pressurized polymer beads 20. Particularly, the pressure within the closed internal cells of the pressurized polymer beads 20 can be an important parameter e.g. of the conveying properties of the pressurized polymer beads 20, the further expandability of the pressurized polymer beads 20, e.g. in a so-called second pass process, the molding properties of the pressurized polymer beads 20, the thermal properties of the pressurized polymer beads 20, and the mechanical properties of the pressurized polymer beads 20.

As mentioned above, the information is determined via the hardware- and/or software-embodied determination device 30. The determination device 30 is thus, adapted, e.g. by programming, to derive the information, wherein at least one parameter indicative of the deformation behavior of the polymer beads 20 during pressurizing of the polymer beads 20 is considered for determining the information. Further, the determination device 30 can be adapted, e.g. by programming, to derive an information on the shape and/or size of the closed internal cells or the shape and/or size of the pressurized polymer beads 20, respectively and/or the pressure within the closed internal cells of the pressurized polymer beads 20, wherein at least one parameter indicative of the deformation behavior of the polymer beads 20 during pressurizing of the polymer beads 20 is considered for determining the information. The determination device 30 is thus, adapted, e.g. by programming, to process at least one parameter indicative of the deformation behavior of the polymer beads 20 during pressurizing of the polymer beads 20 for determining the information.

The method can further comprise a step S3 of controlling, particularly via a hardware- and/or software-embodied control device 40, the pressurizing conditions for pressurizing the polymer beads 20, e.g. in the at least one pressure vessel 12 of the apparatus 10. Notably, the control device 40 can be part of a superordinate machine controller of the apparatus 10. Hence, as indicated above, the information can be used for controlling, particularly via the control device 40, the pressurizing conditions for pressurizing the polymer beads 20, e.g. in the at least one pressure vessel 12 of the apparatus 10. Controlling the pressurizing conditions for pressurizing the polymer beads 20 can comprise at least one of: adjusting or setting a specific static or dynamic temperature level, e.g. within the pressure vessel 12; adjusting or setting a specific static or dynamic pressure level, e.g. within the pressure vessel 12; adjusting or setting a specific static or dynamic atmosphere, e.g. within the pressure vessel 12, for instance. Controlling the pressurizing conditions can lead to at least one of: improved process quality and/or process efficiency, particularly with regard to shorter cycle times, improved quality of the pressurized polymer beads 20, improved and stabler expansion ability of the pressurized polymer beads 20, and improved quality of molded parts produced by molding pressurized polymer beads 20, for instance.

As such, controlling the pressurizing conditions, which can generally be specified by a pressure set point and/or a temperature set point, for instance, in the pressure vessel 12 of the apparatus 10 on basis of the information indicative of an amount or a quantity of gas inside the closed internal cells of the polymer beads 20 can comprise controlling the current and/or future pressure level within a pressurizable inner volume (processing volume 11) of the pressure vessel 12, and/or controlling the current and/or future temperature level within a pressurizable inner volume (processing volume 11) of the pressure vessel 12, and/or controlling the current and/or future atmosphere within a pressurizable inner volume (processing volume 11) of the pressure vessel 12.

As mentioned above, controlling the pressurizing conditions for pressurizing the polymer beads 20 can be performed via the hardware- and/or software-embodied control device 40. As is apparent from Fig. 1, the control device 40 can be in communication with the determination device 30 so as to receive the information from the determination device 30. As such, the control device 40 and the determination device 30 each can comprise one or more communication interfaces (not shown) enabling a communication between the determination device 30 and the control device 40 such that the control device 40 can receive the information from the determination device 30. Particularly, the control device 40 can use the received information to implement an automatic control of the pressurizing conditions for pressurizing the polymer beads 20 which can comprise an automatic static or dynamic adjustment or setting of one or more parameters, such as e.g. pressure, temperature, atmosphere, etc., which have an impact on the pressurizing conditions. The control device 40 can therefore, communicate with means for adjusting and/or setting e.g. pressure, temperature, atmosphere, etc. within the respective pressure vessel 12 and control their operation to realize specific pressurizing conditions within the respective pressure vessel 12. Respective means can be provided with the apparatus 10 and can be or comprise tempering means to adjust or set the temperature within the respective pressure vessel 12 and/or valves connected with a pressure reservoir and/or atmosphere reservoir to adjust or set the pressure and/or atmosphere within the respective pressure vessel 12, for instance.

The determining device 30 can use or implement at least one algorithm, optionally at least one machine learning algorithm, for determining the information, considering at least one parameter indicative of the deformation behavior of the polymer beads 20 during pressurizing of the polymer beads 20.

Additionally or alternatively, determining the information, via the determination device 30, considering at least one parameter indicative of the deformation behavior of the polymer beads 20 during pressurizing of the polymer beads 20 can be based on at least one function or model, typically a model which implements algorithms, which considers at least one parameter of the pressurizing conditions and/or at least one parameter of the polymer beads 20 and at least one parameter indicative of the deformation behavior of the polymer beads 20 during pressurizing of the polymer beads 20. As such, the determination device 30 can comprise or implement at least one function or model, typically a model which implements algorithms, which considers at least one parameter of the pressurizing conditions and/or at least one parameter of the polymer beads 20 and at least one parameter indicative of the deformation behavior of the polymer beads 20 during pressurizing of the polymer beads 20.

Respective parameters of the pressurizing conditions can be obtained through sensor information provided from one or more sensors 110 assigned to the apparatus 10, particularly a respective pressure vessel 12 of the apparatus 10, used for pressurizing the polymer beads 20, for instance. Respective sensors 110 can be or can comprise temperature sensors and/or pressure sensors and/or atmosphere sensors, for instance. Respective parameters of the pressurizing conditions and/or respective parameters of the polymer beads 20 can be obtained through sensor information provided from one or more sensors or from measurements. Respective sensors or measurements can be or can comprise acoustic sensors or measurements, optical sensors or measurements, density sensors or measurements, diffusion sensors or measurements, mass sensors or measurements, pressure sensors or measurements, deformation behavior sensors or measurements, for instance. Additionally or alternatively, respective parameters of the pressurizing conditions and/or respective parameters of the polymer beads 20 can be obtained through simulation and/or modeling, for instance.

Particularly, respective parameters indicative of the deformation behavior of the polymer beads 20 during pressurizing of the polymer beads 20 can be obtained through sensor information provided from one or more sensors 110 assigned to the respective apparatus 10, particularly a respective pressure vessel of the apparatus 10, used for processing the polymer beads 20, particularly for pressurizing the polymer beads 20. Respective sensors 110 can be or can comprise acoustic and/or optic sensors, for instance.

Particularly, the determination device 30 can comprise or implement at least one function or model, typically a model which implements algorithms, which considers at least one parameter of the pressurizing conditions, such as e.g. the temperature and/or pressure within a respective pressure vessel, at least one parameter indicative of the deformation behavior of the polymer beads during pressurizing of the polymer beads, and, optionally, additionally at least one parameter of the polymer beads 20, such as e.g. the diffusion of the gas into the polymer beads 20, particularly under consideration of the Arrhenius equation which is known from scientific literature, the mass of the polymer beads 20, the density of the polymer beads 20, the shape and size of the polymer beads 20. Hence, a respective parameter of the polymer beads can also be or comprise the diffusion coefficient. Notably, also a pressure difference between the pressure in the pressure vessel 12 and the pressure within the closed internal cells of the polymer beads 20 can be taken into account.

The at least one parameter of the pressurizing conditions can be or can comprise a current and/or future pressure level within a pressurizable inner volume (processing volume 11) of at least one pressure vessel 12 in which the polymer beads 20 are pressurized. Additionally or alternatively, the at least one parameter of the pressurizing conditions can be or can comprise a current and/or future temperature level within a pressurizable inner volume (processing volume 11) of at least one pressure vessel 12 in which the polymer beads 20 are pressurized: Additionally or alternatively, the at least one parameter of the pressurizing conditions can be or can comprise at least one chemical and/or physical property, e.g. composition, vapor content, solubility, diffusion, permeation of the gas used to produce the pressurized polymer beads 20 having closed internal cells.

Optionally, the at least one parameter of the pressurizing conditions can be or can comprise at least one chemical and/or physical property, e.g. composition, vapor content, solubility, diffusion, permeation of any fluid, other than the gas used to produce the pressurized polymer beads 20 having closed internal cells, if present within a pressurizable inner volume (processing volume) of at least one pressure vessel in which the polymer beads are pressurized, such as liquid water for instance.

The at least one parameter of the polymer beads 20 can be or can comprise at least one geometric parameter of the polymer beads 20, particularly a geometric parameter, such as e.g. the radius, indicative of the size and/or shape of the polymer beads 20. Notably, the parameter indicative of the deformation behavior of the polymer beads 20 during pressurizing of the polymer beads 20 can also be or comprise a respective geometric parameter of the polymer beads 20. In other words, a geometric parameter of the polymer beads 20 can also be a parameter indicative of the deformation behavior of the polymer beads 20. This particularly, applies because there is a correlation between the geometry, particularly the size and/or shape, of a respective polymer bead 20 and its compression state such that pressurizing the polymer beads 20 will influence compression of the polymer beads 20 which will influence the size and/or shape of the polymer beads 20.

Additionally or alternatively, the at least one parameter of the polymer beads 20 can be or comprise at least one chemical parameter of the polymer beads 20, particularly the chemical composition of the polymer beads 20. Additionally or alternatively, the at least one parameter of the polymer beads 20 can be or comprise at least one physical parameter of the polymer beads 20, particularly the density of the polymer beads 20 and/or the mass of the polymer beads 20 and/or the moisture content of the polymer beads 20 and/or the internal cell pressure of the polymer beads 20 and/or the diffusion properties of the polymer beads 20. Additionally or alternatively, the at least one parameter can be or comprise the amount of internal closed cells within the pressurized polymer beads 20. Additionally or alternatively, the at least one parameter can be or comprise a geometric parameter, e.g. the shape and/or size, of the internal closed cells within the pressurized polymer beads 20. Additionally or alternatively, the at least one parameter of the polymer beads 20 can be or can comprise at least one chemical and/or physical property, e.g. composition, vapor content, solubility, diffusion, permeation of the gas within the closed internal cells of the polymer beads 20.

Experiments have surprisingly shown that specifically geometric parameters indicative of the size and/or shape of the polymer beads 20 and/or the deformation behavior of the polymer beads 20 under compression (pressure) can be crucial for determining the information because these parameters are or can be directly related with the concentration and/or the amount or quantity and/or the pressure of gas inside the closed internal cells of the polymer beads 20 such that considering the geometric parameters indicative of the size and/or shape of the polymer beads 20 and/or the deformation behavior of the polymer beads 20 under compression provides a reliable way to determine the information.

In either case, controlling, via the control device 40, the pressurizing conditions in the at least one pressure vessel 12 on basis of the information can comprise controlling the pressurizing conditions in the at least one pressure vessel 12 with respect to a target concentration and/or target amount or quantity and/or target pressure of gas inside the closed internal cells of the polymer beads 20 and thus, particularly a target inner cell pressure of the polymer beads 20. The respective target values can be application-specific and/or material-specific values and can thus, depend from specific chemical and/or physical properties of the polymer beads 20.

The method can comprise a step S4 of outputting, via the outputting device 50, the information to an operator and/or to the controller 61 of a pre-expansion device 60 for expanding the polymer beads 20 and/or to the controller 71 of a pre-processing device 70 for pre-processing the polymer beads 20 before the pressurizing and/or to the controller 81 of a post-processing device 80 for post-processing the polymer beads 20 after pressurizing and/or to the controller 91 of a molding device 90 for molding the polymer beads 20 to produce a molded part and/or to the controller 101 of a post-processing device 100 for post-processing the polymer beads 20 after molding. Outputting the information can form the basis for any further control step of at least one of the aforementioned devices 60 - 100.

The method can further comprise a step S5 of evaluating the information with respect to at least one evaluation criterion, particularly a reference or target criterion indicative of a reference or target concentration and/or reference or target amount or quantity and/or reference or target pressure of gas inside the closed internal cells of the polymer beads 20. The reference or target criterion, which can be or comprise a reference or target value or a reference or target range, can be chosen under consideration of specific ambient conditions, such as temperature, humidity, pressure, within a plant in which the apparatus 10 is installed and in which the processing of the polymer beads 20 is performed. As such, respective reference or target criterion can be different for different ambient conditions within a plant in which the apparatus 10 is installed and in which the processing of the polymer beads 20 is performed. Notably, different ambient conditions within a plant in which the apparatus 10 is installed and in which the processing of the polymer beads 20 is performed can originate from different times of the day and/or seasons of the year, such as summer and winter, for instance, which enables that the method enables compensating for different ambient conditions within a respective plant and thus, can assure a constant outcome of the pressurization process taking into account of current and/or future ambient conditions in a respective plant.

In either case, a respective reference or target criterion can be obtained through previous pressurization processes of same or similar polymer beads 20, for instance. Additionally or alternatively, a respective reference or target criterion can be derived from models, simulations, etc.

The method can also comprise a step S6 in which the information is used for adjusting or setting a respective reference or target criterion, particularly a reference or target value, indicative, of a reference or target concentration and/or reference or target amount or quantity and/or reference or target pressure of gas inside the closed internal cells of the polymer beads 20 which reference or target criterion is used in a process for pressurizing polymer beads 20 and/or in a process for processing pressurized polymer beads 20, for instance. Particularly, the method can enable that a respective reference or target criterion of a primary process in which polymer beads 20 are processed, e.g. to pressurize polymer beads, are adjusted based on parameters of a secondary process in which the pressurized polymer beads 20 are processed, e.g. to (further) expand the pressurized polymer beads 20 or to produce a molded part, or vice versa. As an example, the method can enable that a respective reference or target criterion of a respective secondary process as mentioned further above can be adjusted based on one or more parameters of a respective primary process as mentioned above which enables that the respective reference or target criterion of the respective secondary process can be individually adjusted based on the one or more parameters of the respective primary process or vice versa. As another example, it is also conceivable that a respective reference or target criterion of a respective primary process as mentioned further above can be dynamically adjusted based on one or more parameters of a respective secondary process as mentioned above being carried out simultaneously with the primary process which enables that the respective reference or target criterion of the respective primary process can be individually adjusted based on the one or more parameters of the respective secondary process or vice versa.

The method can also enable that the information can be used for controlling the pressurizing conditions of multiple pressure vessels 12. Controlling the pressurizing conditions of multiple pressure vessels 12 can be performed at least partly sequentially or at least partly simultaneously. Respective multiple pressure vessels 12 can be assigned to one or more apparatuses 10, for instance. Additionally or alternatively, respective multiple pressure vessels 12 can be assigned to different primary processes and/or to different secondary processes, for instance.

**Claims**

1. A method for processing polymer beads, the method comprising:

    - pressurizing polymer beads, particularly in at least one pressure vessel, under specific pressurizing conditions, particularly comprising at least one specific pressure level and/or at least one specific temperature level, to produce pressurized polymer beads having closed internal cells;
    - determining, via a determination device, an information indicative of a concentration and/or a quantity and/or a pressure of gas inside the closed internal cells of the polymer beads, particularly during pressurizing of the polymer beads, considering at least one parameter indicative of the deformation behavior of the polymer beads during pressurizing of the polymer beads.

2. The method of claim 1, wherein the method further comprises controlling, particularly via a control device, the pressurizing conditions, particularly in the at least one pressure vessel.

3. The method of claim 1 or 2, wherein determining the information is based on a function or a model, typically a model which implements algorithms, which considers at least one parameter of the pressurizing conditions and/or at least one parameter of the polymer beads.

4. The method of claim 3, wherein the at least one parameter of the pressurizing conditions is or comprises a current and/or future pressure level within a pressurizable inner volume of the at least one pressure vessel and/or a current and/or future temperature level within a pressurizable inner volume of the at least one pressure vessel and/or at least one chemical and/or physical property, e.g. composition, vapor content, solubility, diffusion, permeation of the gas used to produce the pressurized polymer beads having closed internal cells.

5. The method of any one of the preceding claims, wherein the at least one parameter of the polymer beads is or comprises at least one geometric parameter of the polymer beads, particularly a geometric parameter indicative of the size and/or shape of the polymer beads, and/or at least one chemical parameter of the polymer beads, particularly the chemical composition of the polymer beads, and/or at least one physical parameter of the polymer beads, particularly the density of the polymer beads and/or the mass of the polymer beads and/or the moisture content of the polymer beads and/or the amount of internal closed cells within the polymer beads and/or a geometric parameter, e.g. the shape and/or size, of the internal closed cells within the polymer beads and/or the internal cell pressure of the polymer beads and/or the diffusion properties of the polymer beads and/or permeability properties of the polymer beads, and/or at least one chemical and/or physical property, e.g. composition, vapor content, solubility, diffusion, permeation of the gas within the closed internal cells of the polymer beads.

6. The method of any one of the preceding claims, wherein controlling, via the control device, the pressurizing conditions in the at least one pressure vessel on basis of the information comprises controlling the current and/or future pressure level within a pressurizable inner volume of the at least one pressure vessel, and/or controlling the current and/or future temperature level within a pressurizable inner volume of the at least one pressure vessel.

7. The method of any one of the preceding claims, wherein controlling, via the control device, the pressurizing conditions in the at least one pressure vessel on basis of the information comprises controlling the pressurizing conditions in the at least one pressure vessel with respect to a target concentration and/or target quantity and/or target pressure of gas inside the closed internal cells of the polymer beads, particularly during pressurizing of the polymer beads, of the polymer beads.

8. The method of any one of the preceding claims, wherein the determining of the information, particularly during pressurizing of the polymer beads, is performed in real-time.

9. The method of any one of the preceding claims, wherein the determining of the information, particularly during pressurizing of the polymer beads, is performed continuously or discontinuously, particularly during a pressurizing cycle.

10. The method of any one of the preceding claims, further comprising outputting via an outputting device, the information to an operator and/or to a controller of a pre-expansion device for expanding the polymer beads and/or to a controller of a pre-processing device for pre-processing the polymer beads before the pressurizing and/or to a controller of post-processing device for post-processing the polymer beads after pressurizing and/or to a controller of a molding device for molding the polymer beads to produce a molded part and/or to a controller of a post-processing device for post-processing the polymer beads after molding.

11. The method of any one of the preceding claims, further comprising evaluating the information with respect to at least one evaluation criterion, particularly a reference or target criterion indicative of a reference or target concentration and/or reference or target quantity and/or reference or target pressure of gas inside the closed internal cells of the polymer beads.

12. The method of claim 11, wherein the information is used for adjusting or setting a target criterion, particularly a target value, indicative of a reference or target concentration and/or reference or target quantity and/or reference or target pressure of gas inside the closed internal cells of the polymer beads which target criterion is used in a process for pressurizing polymer beads and/or in a process for processing pressurized polymer beads.

13. The method of any one of the preceding claims, wherein the information is used for controlling the pressurizing conditions of multiple pressure vessels.

14. An apparatus for processing polymer beads, particularly in accordance with the method of any one of the preceding claims, the apparatus comprising:

- at least one processing volume, e.g. a pressure vessel, for pressurizing polymer beads under specific pressurizing conditions, particularly comprising at least one specific pressure level and/or at least one specific temperature level, to produce pressurized polymer beads;
- a hardware- and/or software-embodied determination device for determining an information indicative of a concentration and/or a quantity and/or a pressure of gas inside the internal cells of the polymer beads, particularly during pressurizing of the polymer beads, considering at least one parameter indicative of the deformation behavior of the polymer beads during pressurizing of the polymer beads; and
- optionally, a control device for controlling the pressurizing conditions in the at least one pressure based on the determined information.

15. A determination device for an apparatus according to claim 14, wherein the determination device is adapted for determining an information indicative of a concentration and/or a quantity and/or a pressure of gas inside the closed internal cells of polymer beads, particularly during pressurizing of the polymer beads, considering at least one parameter indicative of the deformation behavior of the polymer beads during pressurizing of the polymer beads.

Fig. 2

S1
S2
S3
S4
S5
S6

Fig. 1

10

20
11
12

110

40
30
50

60
61
70
71
80
81
90
91
100
101

Europäisches Patentamt
European Patent Office
Office européen des brevets

# EUROPEAN SEARCH REPORT

**Application Number**

EP 24 31 5088

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/117642 A1 (CELLMAT TECH S L [ES]) 9 June 2022 (2022-06-09) * page 9, line 9 - page 10, line 18; claims 1, 5; figure 1a * * page 30, line 6 - line 9 * | 1-6,9-13 | INV. B29C44/34 B29C44/44 B29C44/60 C08J9/18 C08J9/232 |
| X | EP 1 752 236 A1 (GM GLOBAL TECH OPERATIONS INC [US]; BRUKER OPTICS INC [US]) 14 February 2007 (2007-02-14) * paragraphs [0004], [0005], [0011], [0012], [0021] * | 1-15 | ADD. B29K105/04 |
| X | US 2022/040885 A1 (HENINGER ROLF [DE] ET AL) 10 February 2022 (2022-02-10) * paragraphs [0010], [0100], [0101] * | 1-6,9-15 | |
| A | CN 117 529 397 A (FOX VELUTION LTD) 6 February 2024 (2024-02-06) * paragraph [0018] * | 1-15 | |

**TECHNICAL FIELDS SEARCHED (IPC)**

B29C
B29K
C08J

The present search report has been drawn up for all claims

| Place of search | Date of completion of the search | Examiner |
|---|---|---|
| The Hague | 31 May 2024 | Tortosa Masiá, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 31 5088

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2024

| Patent document cited in search report | | Publication date | Patent family member(s) | | Publication date |
|---|---|---|---|---|---|
| WO 2022117642 | A1 | 09-06-2022 | CA | 3200819 A1 | 09-06-2022 |
| | | | EP | 4255973 A1 | 11-10-2023 |
| | | | ES | 2913577 A1 | 02-06-2022 |
| | | | GB | 2615945 A | 23-08-2023 |
| | | | JP | 2023553280 A | 21-12-2023 |
| | | | US | 2024010809 A1 | 11-01-2024 |
| | | | WO | 2022117642 A1 | 09-06-2022 |
| EP 1752236 | A1 | 14-02-2007 | EP | 1752236 A1 | 14-02-2007 |
| | | | US | 2007023969 A1 | 01-02-2007 |
| US 2022040885 | A1 | 10-02-2022 | CN | 112739518 A | 30-04-2021 |
| | | | DE | 102018008534 A1 | 16-04-2020 |
| | | | EP | 3639997 A1 | 22-04-2020 |
| | | | EP | 3867035 A1 | 25-08-2021 |
| | | | US | 2022040885 A1 | 10-02-2022 |
| | | | WO | 2020078583 A1 | 23-04-2020 |
| CN 117529397 | A | 06-02-2024 | CN | 117529397 A | 06-02-2024 |
| | | | DE | 102021111247 A1 | 03-11-2022 |
| | | | EP | 4330003 A1 | 06-03-2024 |
| | | | JP | 2024516426 A | 15-04-2024 |
| | | | KR | 20240005810 A | 12-01-2024 |
| | | | WO | 2022229070 A1 | 03-11-2022 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ONDŘEJ VOPIČKA** ; **VLADIMIR HYNEK** ; **KAREL FRIESS** ; **MILAN ŠÍPEK** ; **PETR SYSEL**. Aparatura pro stanoveni sorpce par v polymerech. *Chem. Listy*, 2009, vol. 103, 310-314

- **J CRANK**. The mathematics of diffusion. Oxford University Press, 01 January 1979
- **CUSSLER, E. L.** Diffusion: Mass Transfer in Fluid Systems. Cambridge University Press, 1997